# EUROPEAN PATENT APPLICATION

(11) **EP 4 614 039 A1**
(43) Date of publication of application: **10.09.2025**
(21) Application number: 23884778.4
(22) Date of filing: 27.10.2023
(51) Int. Cl.: F16K 11/22

(54) **VALVE BODY OF PROPORTIONAL VALVE, PROPORTIONAL VALVE, AND GAS DEVICE**

(30) Priority: 31.10.2022 CN 202211351040
(71) Applicant: Wuhu Midea Smart Kitchen Appliance Manufacturing Co., Ltd., Wuhu, Anhui 241000 (CN)
(72) Inventor: ZHANG, Yibin, Wuhu, Anhui 241000 (CN); QI, Zhengsheng, Wuhu, Anhui 241000 (CN)
(74) Representative: Ran, Handong
(86) International application number: PCT/CN2023/127303
(87) International publication number: WO 2024/093846

(57) **Abstract**

A valve body (100) of a proportional valve, a proportional valve (1000) provided with the valve body (100), and a gas device provided with the proportional valve (1000). The valve body (100) is provided with a first interface (20), a plurality of valve cavities (10), and a plurality of second interfaces (30) corresponding to the plurality of valve cavities (10); the first interface (20) is provided on a peripheral wall of the valve body (100) and is communicated with the plurality of valve cavities (10); the plurality of second interfaces (30) are provided at the same end of the valve body (100), and the plurality of second interfaces (30) are respectively communicated with the corresponding valve cavities (10); each second interface (30) may be communicated with the first interface (20) by means of the corresponding valve cavity (10); the first interface (20) comprises a first section (21) and a second section (22), the first section (21) is communicated with the second section (22), and the second section (22) is communicated with the plurality of valve cavities (10); the second section (22) is offset relative to the first section (21) in a direction away from the second interfaces (30). **In** the valve body (100) of the proportional valve (1000), the second section (22) is offset relative to the first section (21), so that the structure of the valve body (100) is more compact, thereby reducing the size of the proportional valve (1000), and saving the arrangement space in the gas device.

## Description

### CROSS-REFERENCE TO RELATED APPLICATIONS

This invention claims priority to Chinese Patent Application No. 202211351040.1, filed on October 31, 2022 and titled "Valve Body of Proportional Valve, Proportional Valve, and Gas Device", the entire content of which is incorporated herein by reference.

### FIELD

The present invention relates to the technical field of gas device, particularly to a valve body of a proportional valve, the proportional valve having such a valve body, and a gas device having such a proportional valve.

### BACKGROUND

A proportional valve is a type of valve body capable of automatically regulating and controlling on/off of gas flow and precisely controlling a gas flow rate automatically. An operation principle of the proportional valve is as follows. Gas enters a chamber of the proportional valve through an inlet. Upon receiving a signal, the proportional valve opens a ball valve, allowing gas to flow into a main chamber through the ball valve. Since the main chamber is in direct communication with an inner ring, the gas reaches an inner ring once the ball valve opens. A shut-off valve is provided between the main chamber and an outlet of each of outer and middle rings to control their connection.

Currently, commercially available proportional valves tend to be bulky, thick, and structurally complex, resulting in low overall assembly efficiency and poor modularity. Additionally, a multi-ring gas device connected to the proportional valve lacks flexibility of free combination control across different rings.

### SUMMARY

The present invention aims to solve at least one of the technical problems in the related art to some extent.

According to some embodiments of the present invention, a valve body of a proportional valve is proposed, which can reduce a size of the proportional valve, thereby saving a layout space within a gas device.

According to some embodiments of the present invention, a proportional valve is proposed, which includes the valve body as described above.

According to some embodiments of the present invention, a gas device is proposed, which includes the proportional valve as described above.

A valve body of a proportional valve according to some embodiments of the present invention has a first port, at least two valve chambers, and at least two second ports corresponding to the at least two valve chambers. The first port is formed on a peripheral wall of the valve body and in communication with the at least two valve chambers, and the at least two second ports are formed at the same end of the valve body and in communication with corresponding valve chambers respectively. Each of the at least two second ports is in communication with the first port through a corresponding valve chamber of the at least two valve chambers. The first port includes a first section and a second section. The first section is in communication with the second section, and the second section is in communication with the at least two valve chambers. The second section is offset with respect to the first section in a direction away from the at least two second ports.

In the valve body of the proportional valve according to the embodiments of the present invention, by offsetting the second section with respect to the first section, the valve body has a more compact structure, reducing a size of the proportional valve, thereby saving the layout space within the gas device.

Additionally, the valve body of the proportional valve according to the above embodiments may also have the following technical features.

Optionally, the at least two valve chambers are arranged in parallel along an axis of the second section, and the second section extends through walls between adjacent valve chambers to allow the at least two valve chambers to be in communication with each other.

Optionally, an axis of each of the at least two valve chambers is perpendicular to an axis of the second section, and an axis of each of the at least two second ports is collinear with an axis of the corresponding valve chamber.

Optionally, in the projection along an axis of the first section, the second section falls within a coverage range of the first section.

Optionally, the axis of the first section and the axis of the second section are parallel to each other.

Optionally, an axis of the first section, an axis of the second section, and an axis of each of the at least two second ports are located in the same plane.

Optionally, an axis of the first section is collinear with an axis of the second section, and a dimension of the valve body in a thickness direction is less than or equal to 18 mm, where the thickness direction is perpendicular to the axis of the first section, the axis of the second section, and an axis of each of the at least two second ports.

Optionally, an axis of the second section is offset with respect to an axis of the first section in a direction away from the at least two second ports.

Optionally, an inner circumferential surface of the first port further includes a first step surface connected between the inner circumferential surface of the first section and an inner circumferential surface of the second section. A recess is formed on the first step surface. The recess has an opening facing towards the first section, and is in communication with the second section.

Optionally, an inner peripheral surface of the recess is connected to the inner circumferential surface of the second section, and an inner bottom surface of the recess is lower than the first step surface in such a way that the recess is in communication with the second section.

Optionally, a main valve body, a first cover body, and a second cover body are included. The at least two valve chambers are defined inside the main valve body with both ends of the main valve body opening. The first port is formed on a peripheral wall of the main valve body. The first cover body is connected to one end of the main valve body. The at least two second ports are formed on the first cover body. The second cover body is connected to the other end of the main valve body. The main valve body is integrally formed.

A proportional valve according to embodiments of the present invention includes the valve body as described in the above embodiments, at least two sealing pads, and at least two driving assemblies. The at least two sealing pads correspond to the at least two valve chambers. The sealing pads are disposed within corresponding valve bodies and are movable to change opening degrees between the first port and corresponding second ports. The at least two driving assemblies correspond to the at least two sealing pads, and are connected to the corresponding sealing pads to drive the sealing pads to move.

Optionally, each of the at least two the drive assemblies includes an electromagnetic actuator, a diaphragm, and a magnetic member. The electromagnetic actuator is connected to the other end of the valve body. The diaphragm is connected to the valve body and closes the other end of the valve body. The first port and the at least two second ports are formed on the same side of the diaphragm. The magnetic member is connected to a corresponding sealing pad of the at least two sealing pads. The magnetic member is configured to move the sealing pad when driven by the electromagnetic actuator.

Optionally, the drive assembly further includes a first seat body and a second seat body. The first seat body is connected to the sealing pad, and the second seat body extends through the diaphragm and is inserted into the first seat body. The second seat body cooperates with the first seat body to clamp and fix the diaphragm.

Optionally, the magnetic member is sleeved on the second seat body, and is clamped and fixed by the first seat body and the second seat body.

Optionally, an axis of the electromagnetic actuator extends along an axial direction of the valve body, and the electromagnetic actuator is opposite to the at least two second ports.

A gas device according to an embodiment of the present invention includes the proportional valve as described in the above embodiments.

Additional aspects and advantages of the present invention will be partly given in the following description, partly will become apparent from the following description, or can be learned through the practice of the present invention.

### BRIEF DESCRIPTION OF THE DRAWINGS

Figure 1 is a schematic view of a proportional valve according to some embodiments of the present invention.
Figure 2 is a sectional view of a proportional valve according to some embodiments of the present invention.
Figure 3 is a sectional view of a main valve body according to some embodiments of the present invention.
Figure 4 is a schematic view of a main valve body according to some embodiments of the present invention.
Figure 5 is a schematic view of a first cover body according to some embodiments of the present invention.
Figure 6 is a schematic view of a second cover body according to some embodiments of the present invention.
Figure 7 is a schematic installation view of a proportional valve according to some embodiments of the present invention.

To better describe and illustrate the embodiments and/or examples of the inventions disclosed herein, reference may be made to one or more drawings. Additional details or examples for describing the drawings should not be considered as limiting the scope of the disclosed inventions, the currently described embodiments, and/or examples, or the best embodiments of these inventions as currently understood.

Reference numerals
proportional valve 1000, valve body 100, valve chamber 10, first port 20, first section 21, second section 22, recess 23, second port 30, main valve body 40, first cover body 50, second cover body 60, first step surface 70, sealing pad 200, electromagnetic actuator 310, diaphragm 320, magnetic member 330, first seat body 340, second seat body 350, thickness direction A-A.

### DETAILED DESCRIPTION

The present invention proposes a valve body 100 of a proportional valve 1000, the proportional valve 1000 having the valve body 100, and a gas device having the proportional valve 1000, which can reduce a size of the proportional valve 1000, thereby saving a layout space within the gas device.

Embodiments of the present invention will now be described in detail, with examples thereof shown in the accompanying drawings, where the same or similar reference numerals throughout the drawings indicate the same or similar elements or elements having the same or similar functions. The exemplary embodiments described below with reference to the drawings are illustrative and are intended to explain the present invention, rather than being construed as limiting the present invention.

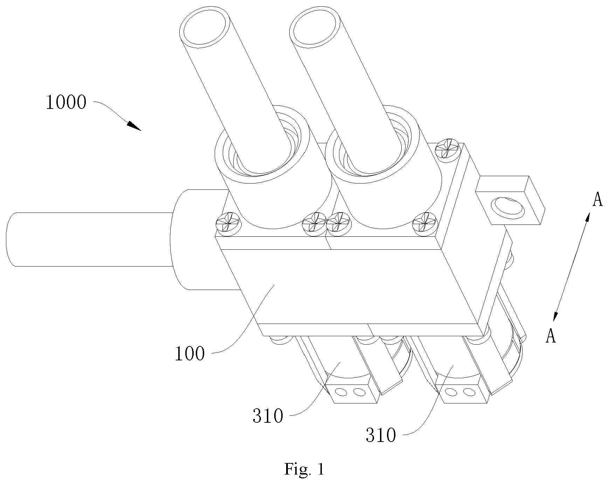

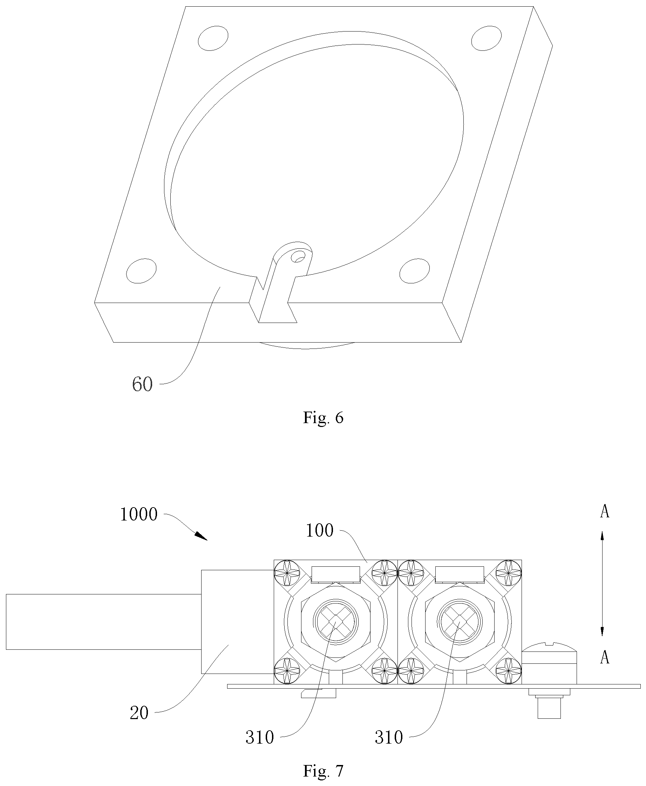

As shown in Figures 1 to 7, the valve body 100 of the proportional valve 1000 according to the embodiments of the present invention includes a first port 20, at least two valve chambers 10, and at least two second ports 30 corresponding to the at least two valve chambers 10. The first port 20 is formed on a peripheral wall of the valve body 100 and is in communication with the at least two valve chambers 10. The at least two second ports 30 are formed on the same end of the valve body 100, and are in communication with corresponding valve chambers 10, respectively. Each of the at least two second ports 30 is in communication with the first port 20 through a corresponding valve chamber 10 of the at least two valve chambers 10. The first port 20 includes a first section 21 and a second section 22. The first section 21 is in communication with the second section 22, and the second section 22 is in communication with the at least two valve chambers 10. Further, the second section 22 is offset with respect to the first section 21 in a direction away from the second ports 30. Therefore, a size of the proportional valve 1000 is reduced, and a layout space inside the gas device is saved.

The first port 20 is used for gas inlet, and the second ports 30 are used for gas outlet. That is, gas enters the valve body 100 through the first port 20, passes through the at least two valve chambers 10, and then exits from the corresponding second ports 30 of the valve chamber 10.

Specifically, at least two sealing pads 200 may be provided in the at least two valve chambers 10. Each of the sealing pads 200 may have a predetermined movement range within the respective valve chambers 10, allowing the sealing pad 200 to move within the corresponding valve chambers 10, thereby adjusting an opening degree between the first port 20 and the second port 30 associated with the sealing pad 200. Typically, the sealing pad 200 may be disposed between the first port 20 and the corresponding second port 30, and the adjustment of the opening degree may be implemented through the movement of the sealing pad 200. In the present invention, the second section 22 is offset with respect to the first section 21 in a direction away from the second port 30. During this process, the movement range of the sealing pad 200 may shift along with the offset of the second section 22. In this way, an internal structure of the valve chamber 10 is more compact. Therefore, the size of the valve body 100 is reduced while increasing integration of the valve body 100, thus saving a layout space inside the gas device.

Therefore, in the valve body 100 of the proportional valve 1000 according to the embodiments of the present invention, by offsetting the second section 22 with respect to the first section 21, the valve body 100 has a more compact structure, reducing the size of the proportional valve 1000, thereby saving the layout space within the gas device.

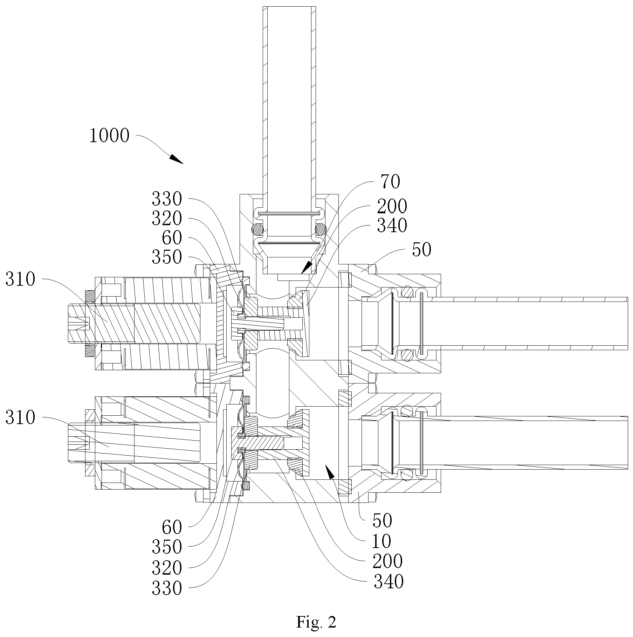

As shown in Figures 2, 3, and 4, in some embodiments of the present invention, the at least two valve chambers 10 are arranged side by side along an axis of the second section 22, and the second section 22 extends through walls between adjacent valve chambers 10 to allow the at least two valve chambers 10 to be in communication with each other. Therefore, machining and manufacturing of the valve body 100 is facilitated.

By arranging the at least two valve chambers 10 side by side along the axis of the second section 22, the machining and manufacturing of the valve body 100 is facilitated. That is, when machining the valve body 100 by a machining tool, the machining tool only needs to machine the valve body 100 along a direction of the axis of the second section 22 to allow the adjacent valve chambers 10 to be penetrated. In this way, the at least two valve chambers 10 have a single machining direction, which facilitates the machining and manufacturing of the valve body 100 and saves machining costs.

In addition, when gas enters the valve body 100 from the second section 22, due to inertia of the gas flow, the gas will continue to flow along the axis of the second section 22. Further, since the at least two valve chambers 10 are arranged side by side along the axis of the second section 22, the gas can quickly fill the at least two valve chambers 10. As a result, the gas can easily flow out from the at least two second ports 30, ensuring a normal operation of the proportional valve 1000.

Of course, in this invention, the first section 21 may be in communication with the second section 22, and the second section 22 may be in communication with the at least two valve chambers 10. That is, the second section 22 may be in communication with of at least two valve chambers 10 simultaneously. In addition, the second section 22 may also be in communication with at least one of the at least two valve chambers 10 with adjacent valve chambers 10 being in communication with each other, thus allowing the second section 22 to be in communication with the at least two valve chambers 10. These variations do not limit the scope of the present invention.

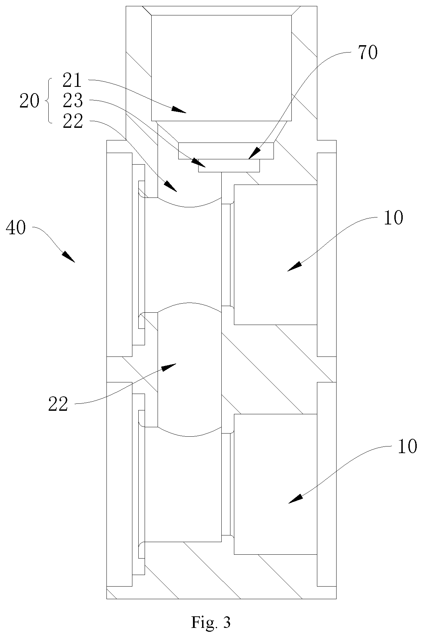

As shown in Figure 3, in some embodiments of the present invention, an axis of each valve chamber 10 is perpendicular to the axis of the second section 22, and an axis of each second port 30 is collinear with the axis of the valve chamber 10. That is, the axis of the second section 22 is perpendicular to the axis of the second port 30. Therefore, compared to a case where the axis of the second section 22 is parallel to the axis of the second port 30, the perpendicular arrangement of the axis of the second section 22 and the axis of the second port 30 can make the structure more compact. Additionally, when the first port 20 and the second ports 30 are connected to gas pipes, this arrangement allows the gas pipes to be laid out more reasonably and smoothly within the limited internal space of the gas device.

As shown in Figures 2 and 3, in some embodiments of the present invention, in a projection along the axis of the first section 21, the second section 22 falls within a coverage range of the first section 21, which allows the second section 22 to be offset within the projection range of the first section 21 along its axis, thereby reducing a projection of the valve body 100 along an axial direction of the first section 21. Therefore, the design size of the proportional valve 1000 is reduced.

For the first port 20, a size of the second section 22 may be smaller than that of the first section 21. Therefore, when the second section 22 is offset with respect to the first section 21 in a direction away from the second ports 30, in the projection along the axis of the first section 21, the second section 22 may fall within the projection of the first section 21, thereby reducing a projection area of the valve body 100 along the axis of the first section 21, and accordingly reducing the size of the proportional valve 1000 and saving the layout space inside the gas device.

As shown in Figures 2 and 3, in some embodiments of the present invention, the axis of the first section 21 and the axis of the second section 22 are parallel to each other. That is, for the first port 20, the extension direction of the first section 21 is consistent with that of the second section 22, which facilitates the machining and manufacturing of the proportional valve 1000.

Therefore, combining the aforementioned embodiments, as shown in Figures 2 and 3, in the projection along the axis of the first section 21, the second section 22 falls within the coverage range of the first section 21, and the axes of the first section 21 and the second section 22 are parallel to each other. This allows feed and retraction directions of the first section 21 and the second section 22 to be consistent during the machining and manufacturing of the valve body 100. Additionally, since the size of the second section 22 is smaller than that of the first section 21, the second section 22 can be machined first, followed by the first section 21, which facilitates retraction of the machining tool.

As shown in Figures 1 to 4, in some embodiments of the present invention, the axis of the first section 21, the axis of the second section 22, and the axis of each second port 30 are located in the same plane. Alternatively, the axis of the first section 21 and the axis of the second section 22 are collinear, and a dimension of the valve body 100 in a thickness direction may be less than or equal to 18 mm, where the thickness direction is perpendicular to the axis of the first section 21, the axis of the second section 22, and the axis of each second port 30. Therefore, the size of the proportional valve 1000 can be reduced, thereby saving the layout space inside the gas device.

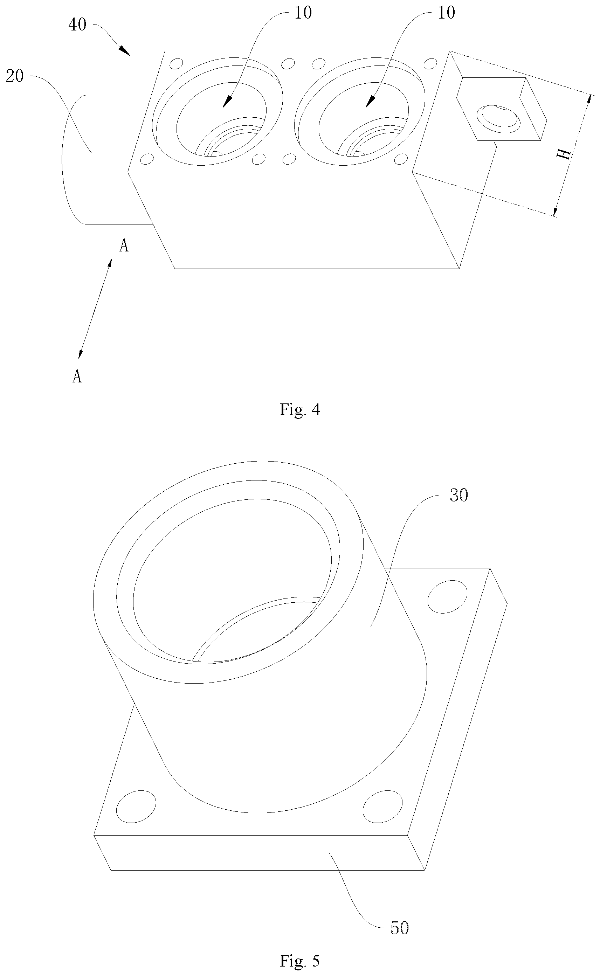

As shown in Figure 4, the dimension of the valve body 100 in the thickness direction may be H.

Specifically, the axis of the first section 21, the axis of the second section 22, and the axis of each second port 30 are located in the same plane. That is, the dimension of the valve body 100 along the thickness direction may be constant. When the second section 22 is offset with respect to the first section 21 in a direction away from the second ports 30, the movement range of the sealing pad 200 inside the valve body 100 also shifts, making the internal space of the valve body 100 more compact, thereby achieving a reduction in the size of the proportional valve 1000.

Additionally, the axes of the first section 21 and the second section 22 are collinear. That is, the axis of the first section 21 and the axis of the second section 22 are coincident and/or parallel with each other. When the second section 22 is offset with respect to the first section 21 in a direction away from the second ports 30, the dimension of the valve body 100 along the thickness direction may be less than or equal to 18 mm (for example, the thickness dimension of the valve body 100 may be 10 mm, 11 mm, or the like, thus achieving the reduction in the size of the proportional valve 1000. Of course, the dimension of the valve body 100 in the thickness direction may be greater than 18 mm and less than 38 mm, or greater than 38 mm, and the present invention is not limited in this regard.

As shown in Figures 2 and 3, in some embodiments of the present invention, the axis of the second section 22 is offset with respect to the axis of the first section 21 in a direction away from the second port 30. That is, the axis of the second section 22 is parallel to the axis of the first section 21, and the second section 22 is offset with respect to the first section 21 in a direction away from the second ports 30, thereby shifting the movement range of the sealing pads 200. Accordingly, the projection of the valve body 100 along the axis of the first section 21 can be reduced, thus reducing the design size of the proportional valve 1000 and saving the layout space inside the gas device.

As shown in Figures 2 and 3, in some embodiments of the present invention, an inner circumferential surface of the first port 20 also includes a first step surface 70 connected between an inner circumferential surface of the first section 21 and an inner circumferential surface of the second section 22. For example, since the axis of the second section 22 is offset with respect to the axis of the first section 21, the first step surface 70 may be formed. A recess 23 may be formed on the first step surface 70 with an opening of the recess 23 facing towards the first section 21. Further, the recess 23 may be in communication with the second section 22. When the second section 22 is offset with respect to the first section 21 in a direction away from the second ports 30, it is ensured that a flow rate of gas entering the valve chamber 10 can reach a predetermined value.

Since the size of the second section 22 is smaller than that of the first section 21, and there is an offset between the second section 22 and the first section 21, this will cause obstruction to a fluid flowing through the first port 20. For example, as shown in Figures 2 and 3, when entering the second section 22 from the first section 21, airflow will be blocked by the first step surface 70, resulting in an increase in fluid flow resistance. Therefore, by forming the recess 23 in communication with the second section 22, the fluid flow resistance can be effectively reduced.

Specifically, at least two recesses 23 may be formed on the first step surface 70. Further, the at least two recesses 23 may be in communication with the second section 22. For instance, at least two channels may be formed to allow the recesses 23 to be in communication with the second section 22. Alternatively, at least two through-holes may be formed to allow the recesses 23 to be in communication with the second section 22. Thus, when gas flows from the first section 21 to the second section 22, the gas may at least partially flow from the recesses 23 to the second section 22, ensuring that the flow rate of gas entering the valve chamber 10 can reach the predetermined value, thereby allowing the gas device to function properly.

As shown in Figures 2 and 3, in some embodiments of the present invention, the inner peripheral surface of the recess 23 may be connected to the inner circumferential surface of the second section 22, and the inner bottom surface of the recess 23 is lower than the first step surface 70, in such a way that the recess 23 is in communication with the second section 22, or in other words, an outlet communicating with the first section 21 may be constructed by the peripheral surface of the recess 23, which can ensure that the flow rate of the gas entering the valve chamber 10 reaches the predetermined value, ensuring the normal operation of the gas device.

As shown in Figures 4, 5, and 6, in some embodiments of the present invention, a main valve body 40, a first cover body 50, and a second cover body 60 are included. The at least two valve chambers 10 are defined inside the main valve body 40 with both ends of the main valve body 40 opening. The first port 20 is formed on a peripheral wall of the main valve body 40. The first cover body 50 is connected to one end of the main valve body 40, and the at least two second ports 30 are formed on the first cover body 50. The second cover body 60 is connected to the other end of the main valve body 40. Further, the main valve body 40 is integrally formed. This facilitates the processing and manufacturing of the valve body 100.

Additionally, a seal may be provided on the main valve body 40 to enhance sealing performance of the valve assembly 100, ensuring that the proportional valve 1000 can function properly. For example, the first cover body 50 is connected to one end of the main valve body 40, and a seal may be provided between the first cover body 50 and the main valve body 40 to improve the sealing performance of the valve assembly 100. Similarly, the second cover body 60 is connected to the other end of the main valve body 40, and a seal may be provided between the second cover body 60 and the main valve body 40 to enhance the sealing performance of the valve assembly 100.

A proportional valve 1000 according to embodiments of the present invention includes a valve body 100 as described in any of the above embodiments, at least two sealing pads 200, and at least two drive assemblies. The at least two sealing pads 200 correspond to the at least two valve chambers 10. Further, each sealing pad 200 is disposed within the corresponding valve body 100 and is movable to change an opening degree between the first port 20 and the corresponding second port 30. The at least two drive assemblies correspond to the at least two sealing pads 200, and are connected to the corresponding sealing pads 200 to drive the sealing pads 200 to move, thereby controlling the gas flow through the proportional valve 1000. Additionally, when a multi-ring gas stove is connected, heat of each ring in the gas stove can be freely combined and controlled.

Specifically, when gas enters the valve body 100 through the first port 20, the drive assembly may move the corresponding sealing pad 200 within the valve chamber 10, enabling the first port 20 to be in communication with the corresponding second port 30. The gas then flows from the first port 20 into the valve body 100, passes through the valve chambers 10, and exits the valve body 100 through the corresponding second port 30. During this process, the corresponding sealing pad 200 disposed within the corresponding valve chamber 10 in the valve body 100 may move within a certain space, thereby adjusting the opening degree between the first port 20 and the second port 30, which alters the gas flow through the proportional valve 1000.

Moreover, when the second section 22 is offset with respect to the first section 21 in a direction away from the second ports 30, since the second section 22 may be in communication with the at least two valve chambers 10, the movement range of the sealing pads 200 will also shift with the offset of the second section 22. Further, in the projection on the axis of the first section 21, when the projection area of the first section 21 is internally tangent to the projection area of the second section 22, the projection area of the valve body 100 along the axis of the first section 21 can be minimized, thereby reducing the design size of the proportional valve 1000.

In addition, the at least two sealing pads 200 and their corresponding drive assemblies are mutually independent, allowing different gas flows to be discharged through the at least two second ports 30 to achieve combined control of the gas device. For example, in a case where the proportional valve 1000 is connected to a dual-ring gas stove, in order to allow the dual-ring gas stove to have different combinations of gas modes, the proportional valve 1000 has a structure with the dual-valve chamber 10 where one of two second ports 30 is connected to an inner ring of the gas stove, and the other is connected to an outer ring of the gas stove. By controlling the drive assembly associated with the valve body 100, the opening degree between the first port 20 and the corresponding second port 30 can be adjusted, to allow for equal gas flow through the two second ports 30, which ensures that the heat generated by the dual-ring gas stove is uniform, achieving uniform heating of materials. Of course, it is also possible to allow for different gas flows through the two second ports 30, resulting in different heat outputs from the dual-ring gas stove.

As shown in Figures 1, 2, and 7, in some embodiments of the present invention, each of the at least two drive assemblies includes an electromagnetic actuator 310, a diaphragm 320, and a magnetic member 330. The electromagnetic actuator 310 is connected to the other end of the valve body 100, and the diaphragm 320 may be connected to the valve body 100 and closes the other end of the valve body 100. The first port 20 and the at least two second ports 30 are located on the same side of the diaphragm 320. The magnetic member 330 may be connected to the corresponding sealing pad 200, and is configured to move the sealing pad 200 when driven by the electromagnetic actuator 310, thereby achieving precise control of the opening degree between the first port 20 and the second port 30.

The connection between the electromagnetic actuator 310 and the valve body 100 may be a threaded connection or the like.

Specifically, when in operation, the electromagnetic actuator 310 can drive the magnetic member 330 to move within the valve body 100, thereby indirectly driving the sealing pad 200 to move within the valve body 100 to change the opening degree between the first port 20 and the second port 30, allowing gas to pass through the proportional valve 1000. When the electromagnetic actuator 310 is not in operation, the sealing pads 200 can isolate the valve chambers 10 from each other, disconnecting the first port 20 from the second ports 30. In this case, gas cannot pass through the proportional valve 1000.

Furthermore, by varying a magnitude of a magnetic force generated by the electromagnetic actuator 310, the magnetic member 330 may be subjected to different forces, thereby changing the opening degree between the first port 20 and the second port 30, achieving precise control of the opening degree.

Of course, depending on the actual situation, the electromagnetic actuator 310 may generate an attractive force to attract the magnetic member 330 to change the opening degree of the valve body 100. In addition, the electromagnetic actuator 310 may also generate a repulsive force to repel the magnetic member 330 to change the opening degree of the valve body 100.

As shown in Figure 2, in some embodiments of the present invention, each of the drive assemblies further includes a first seat body 340 and a second seat body 350. The first seat body 340 is connected to the sealing pad 200, and the second seat body 350 extends through the diaphragm 320 and is inserted into the first seat body 340. Further, the second seat body 350 and the first seat body 340 cooperate to clamp and fix the diaphragm 320, which can keep the first port 20 and the second port 30 in a disconnected state.

Specifically, the diaphragm 320 is indirectly connected to the sealing pad 200 through the first seat body 340 and the second seat body 350, and the diaphragm 320 may be connected to the valve body 100. When the electromagnetic actuator 310 is not in operation, the diaphragm 320 has a predetermined elasticity, which can keep the sealing pad 200 in contact with the second step surface, thereby disconnecting the first port 20 from the second ports 30.

Of course, according to actual needs, the second seat body 350 may also extend through the diaphragm 320 to be inserted outside the first seat body 340.

As shown in Figure 2, in some embodiments of the present invention, the magnetic member 330 is sleeved on the second seat body 350, and is clamped and fixed by the first seat body 340 and the second seat body 350, thereby improving the connection stability between the sealing pad 200 and the magnetic member 330.

Specifically, when in operation, the electromagnetic actuator 310 may drive the magnetic member 330 to move within the valve body 100. Since the magnetic member 330 is sleeved on the second seat body 350 and clamped and fixed by the first seat body 340 and the second seat body 350, the electromagnetic actuator 310 may indirectly drive the sealing pad 200 to move within the valve body 100, thereby changing the opening degree between the first port 20 and the second port 30, enabling gas flow to pass through the proportional valve 1000.

Additionally, the stable connection between the magnetic member 330 and the sealing pad 200 by means of the first seat body 340 and the second seat body 350 can enhance the stability of force transmission between the magnetic member 330 and the sealing pad 200, ensuring the control of the opening degree of the valve body 100.

As shown in FIG. 2, in some embodiments of the present invention, an axis of the electromagnetic actuator 310 extends along the axial direction of the valve body 100, and the electromagnetic actuator 310 is opposite to the second port 30, which can ensure the stability of the operation of the proportional valve 1000.

In particular, the axis of the electromagnetic actuator 310 extends along the axial direction of the valve body 100. That is, the direction of the magnetic force generated by the electromagnetic actuator 310 is the axial direction of the valve body 100. Therefore, when driving the magnetic member 330, the electromagnetic actuator 310 may cause the magnetic member 330 to move in the axial direction of the valve body 100, thereby indirectly driving the sealing pad 200 to achieve control of the opening degree of the valve body 100. Therefore, the stability of the operation of the proportional valve 1000 is ensured.

A gas device according to an embodiment of the present invention includes the proportional valve 1000 as described in any one of the above embodiments. The second section 22 of the proportional valve 1000 is offset with respect to the first section 21 in a direction away from the second port 30, thereby shifting the movement range of the sealing pad 200 within the proportional valve 1000. As a result, the projection area of the proportional valve 1000 along the axis of the first section 21 is reduced, thus reducing the overall size of the proportional valve 1000, thereby saving the layout space inside the gas device. Additionally, the gas device may be freely combined and controlled according to user needs. For example, when the gas device is a multi-ring gas stove, heat of each ring of the gas device may be controlled through various free combination control using the proportional valve 1000, thereby satisfying user's requirements.

In addition, the proportional valve 1000 also includes at least two second ports 30 and corresponding components, which can achieve various gas flow control for the gas device.

In addition, the proportional valve 1000 may be connected to the gas device through threaded connections and/or snap-fit connections to enhance the connection strength between the proportional valve 1000 and the gas device.

For example, in a case where the gas device is a dual-ring gas stove and the proportional valve 1000 has a structure with the dual-valve chamber 10, one of the two second ports 30 of the proportional valve 1000 may be connected to an inner ring of the gas stove, and the other of the two second ports 30 may be connected to an outer ring of the gas stove, and the opening degree of the first port 20 and the corresponding second port 30 can be achieved by controlling the magnetic force of the electromagnetic actuator 310 to drive the magnetic member 330. Therefore, the opening degree of the corresponding valve chamber 10 can be controlled by controlling the electromagnetic actuator 310 corresponding to the valve chamber 10, so that the gas flow through the two valve chambers 10 can be the same or different, thereby making flame sizes generated by the two rings on the gas stove the same or different, achieving various combination control of the dual-ring gas stove.

According to some specific examples of the present invention, the inlet (i.e., the first port 20) is perpendicular to the outlets (i.e., the second ports 30), a coil assembly (i.e., the electromagnetic actuator 310) and the outlet (i.e., the second ports 30) are arranged on the same side, and there are all located in the same horizontal plane, with the proportional valve 1000 being horizontally mounted on the base housing of the entire machine (i.e., the gas device). A thickness of the proportional valve 1000 does not exceed 18 mm, and other components that cooperate with the proportional valve 1000 are made smaller, reducing the overall size of the proportional valve 1000 while ensuring its strength.

According to some specific examples of the present invention, the proportional valve 1000 is provided with clips and screw holes on a bottom thereof, and the base housing of the entire machine (i.e., the gas device) may be provided with mated openings and screw fixing holes. When fixing the proportional valve 1000, the clips may first pass through the openings and then be pushed horizontally into place and aligned with the screw holes. Finally, the proportional valve 1000 is secured to the base housing through tightening screws.

According to some specific examples of the present invention, the cross-sectional diameter of a plastic upper seat (i.e., the second seat body 350) is smaller than the cross-sectional diameter of the plastic lower seat (i.e., the first seat body 340). The plastic upper seat (i.e., the second seat body 350) extends through the diaphragm 320 and the magnet (i.e., the magnetic member 330), and is inserted into the plastic lower seat (i.e., the first seat body 340). The magnet (i.e., the magnetic member 330) does not occupy the space between the plastic upper seat (i.e., the second seat body 350) and the upper cover (i.e., the second cover body 60), significantly reducing a height of the upper cover (i.e., the second cover body 60), thereby reducing the overall size of the proportional valve 1000.

According to some specific examples of the present invention, the inlets (i.e., the first port 20) and the outlets (i.e., the second ports 30) of the valve body 100 are all quick-connection structures, avoiding leakage issues that would easily occur with pipe tightening, and significantly improving installation efficiency. An inlet channel is designed with a parallel core-pulling structure, allowing for simplified mold design when there are two or more rings, eliminating the need for post-processing drilling. A central axis of an intake pipe is offset from a central axis of the inlet channel (i.e., the first port 20) of the valve body 100. This arrangement reduces a total length in an exhaust direction while maintaining the required flow channel area, thereby reducing the overall size of the proportional valve 1000.

According to some specific examples of the present invention, a working principle of the proportional valve 1000 will be described below. First, gas enters one chamber (i.e., the valve chamber 10) of the valve body 100 through the gas pipe assembly via the inlet (i.e., first port 20). Upon receiving a current signal, the coil assembly (i.e., the electromagnetic actuator 310) causes a soft magnetic rod to generate a magnetic force to repel the magnet (i.e., the magnetic member 330) below the soft magnetic rod. A ball valve formed by the plastic lower seat (i.e., first seat body 340) and the rubber sealing (i.e., the sealing pad 200) will move downwards, allowing the gas to flow from the first chamber into the second chamber, and then be output through the gas pipe assembly at the outlets (i.e., the second ports 30).

According to some specific examples of the present invention, a protrusion of the gas pipe assembly the right side may be retained with the protrusion on the left side removed, or there may be an inclined surface to facilitate a gradual expansion and sliding of a sealing ring into the corresponding position. The sealing surface may receive one or more sealing rings.

According to some specific examples of the present invention, an inner diameter of the sealing ring is smaller than an outer diameter of the gas pipe assembly at the sealing surface, and an outer diameter of the sealing ring is greater than an inner diameter of the outlet (i.e., the second port 30) of the valve body 100 assembly. A deformation of the sealing ring due to compression among them will form the sealing surface.

According to some specific examples of the present invention, an ultra-thin structure is proposed where an inlet channel (i.e., the first port 20), outlet channels (i.e., the second port 30), and the proportional valve 1000 are all on the same horizontal plane, with the overall thickness not exceeding 18mm. The inlet channel (i.e., the first port 20) and the outlet channels (i.e., the second ports 30) employ quick-connection structures, which enhance the efficiency of the entire machine's pipe connection while ensuring the cross-sectional area of the gas channel. Further, snap-fit connections are provided for easy assembly with the bottom shell of the entire machine. The proportional valve 1000 has a high degree of modularity and strong compatibility, and is capable of achieving dual-ring, three-ring, and multiple-ring configurations, with free combination control between these rings.

In the description of this invention, it should be understood that terms such as "length", "thickness", "top", "bottom", "front", "rear", "left", "right", "horizontal", "top", "bottom", "inside", "outside", "axial", etc., indicate directions or positional relationships based on the orientation shown in the drawings. These terms are used merely for the convenience of describing the invention and simplifying the description, and do not imply or suggest that the device or element must have a specific orientation or be constructed and operated in a specific orientation, and thus should not be construed as limiting the invention.

In addition, the terms "first" and "second" are used only for descriptive purposes and should not be construed as indicating or implying relative importance or implicitly specifying the number of technical features indicated. Thus, features limited by "first" and "second" can explicitly or implicitly include at least one such feature. In the description of this invention, the term "two or more" means at least two, such as two, three, etc., unless otherwise specifically defined.

In this invention, unless otherwise expressly specified and defined, the terms "install", "connect", "connection", "fix", etc., should be broadly understood. For example, they may refer to fixed connections, removable connections, or integral formations. They may be mechanical connections or electrical connections; they may be directly connected or indirectly connected through an intermediate medium; they may be the internal connection between two elements or the interaction relationship between two elements, unless otherwise explicitly specified. For those of ordinary skilled in the art, the specific meanings of the above terms in this invention may be understood according to specific circumstances.

In this invention, unless otherwise expressly provided and defined, the first feature being "on" or "under" the second feature may mean that the first and second features are in direct contact, or the first and second features are in indirect contact through an intermediate medium. Moreover, the first feature being "above", "over", or "on top of" the second feature may mean that the first feature is directly above or diagonally above the second feature, or merely indicates that the first feature has a higher horizontal level than the second feature. The term "below", "under", and "beneath" when used to describe the first feature with respect to the second feature may mean that the first feature is directly below or diagonally below the second feature, or simply indicates that the first feature has a lower horizontal level than the second feature.

In the description of this specification, reference terms such as "an embodiment", "some embodiments", "example", "specific example", or "some examples" refer to specific features, structures, materials, or characteristics described in conjunction with the embodiment or example being included in at least one embodiment or example of the invention. In this description, the illustrative expressions of the above terms do not necessarily refer to the same embodiment or example. Furthermore, the specific features, structures, materials, or characteristics described can be combined in any one or more embodiments or examples in a suitable manner. In addition, those skilled in the art may combine and combine different embodiments or examples and the features of different embodiments or examples described in this specification without contradiction.

Although embodiments of the invention have been shown and described above, it is understood that these embodiments are exemplary and are not to be construed as limiting the invention. Those of ordinary skilled in the art can make variations, modifications, substitutions, and alterations to the above embodiments within the scope of the present invention.

## Claims

1. A valve body of a proportional valve, wherein:
the valve body has a first port (20), at least two valve chambers (10), and at least two second ports (30) corresponding to the at least two valve chambers (10), the first port (20) being formed on a peripheral wall of the valve body and in communication with the at least two valve chambers (10), the at least two second ports (30) being formed at the same end of the valve body and in communication with corresponding valve chambers (10) respectively, and each of the at least two second ports (30) being in communication with the first port (20) through a corresponding valve chamber (10) of the at least two valve chambers (10); and
the first port (20) comprises a first section (21) and a second section (22), the first section (21) being in communication with the second section (22), the second section (22) being in communication with the at least two valve chambers (10), and the second section (22) being offset with respect to the first section (21) in a direction away from the at least two second ports (30).

2. The valve body of the proportional valve according to claim 1, wherein:
the at least two valve chambers (10) are arranged side by side along an axis of the second section (22); and
the second section (22) extends through walls between adjacent valve chambers (10) of the at least two valve chambers (10) to allow the at least two valve chambers (10) to be in communication with each other.

3. The valve body of the proportional valve according to claim 1 or 2, wherein:
an axis of each of the at least two valve chambers (10) is perpendicular to an axis of the second section (22); and
an axis of each of the at least two second ports (30) is collinear with an axis of the corresponding valve chamber (10).

4. The valve body of the proportional valve according to claim 2, wherein:
in a projection along an axis of the first section (21), the second section (22) falls within a coverage range of the first section (21); and/or
the axis of the first section (21) and the axis of the second section (22) are parallel to each other.

5. The valve body of the proportional valve according to any one of claims 1 to 4, wherein an axis of the first section (21), an axis of the second section (22), and an axis of each of the at least two second ports (30) are located in the same plane.

6. The valve body of the proportional valve according to any one of claims 1 to 5, wherein:
an axis of the first section (21) is collinear with an axis of the second section (22); and
a dimension of the valve body in a thickness direction is less than or equal to 18 mm, the thickness direction being perpendicular to the axis of the first section (21), the axis of the second section (22), and an axis of each of the at least two second ports (30).

7. The valve body of the proportional valve according to any one of claims 1 to 6, wherein an axis of the second section (22) is offset with respect to an axis of the first section (21) in a direction away from the at least two second ports (30).

8. The valve body of the proportional valve according to claim 7, wherein:
an inner circumferential surface of the first port (20) further comprises a first step surface (70) connected between an inner circumferential surface of the first section (21) and an inner circumferential surface of the second section (22); and
a recess (23) is formed on the first step surface (70), has an opening opposite to the first section (21), and is in communication with the second section (22).

9. The valve body of the proportional valve according to claim 8, wherein:
an inner peripheral surface of the recess (23) is connected to the inner circumferential surface of the second section (22); and
an inner bottom surface of the recess (23) is lower than the first step surface (70) to allow the recess (23) to be in communication with the second section (22).

10. The valve body of the proportional valve according to any one of claims 1 to 9, comprising:
a main valve body (40), wherein the at least two valve chambers (10) are defined inside the main valve body (40) with both ends of the main valve body (40) opening, and the first port (20) is formed on a peripheral wall of the main valve body (40);
a first cover body (50) connected to one end of the main valve body (40), the at least two second ports (30) being formed on the first cover body (50); and
a second cover body (60) connected to the other end of the main valve body (40),
wherein the main valve body (40) is integrally formed.

11. A proportional valve, comprising:
the valve body according to any one of claims 1 to 10;
at least two sealing pads (200) corresponding to the at least two valve chambers (10), the sealing pads (200) being disposed within corresponding valve bodies respectively and being movable to change opening degrees between the first port (20) and corresponding second ports (30); and
at least two drive assemblies corresponding to the at least two sealing pads (200), the at least two drive assemblies being connected to corresponding sealing pads (200) to drive the sealing pads (200) to move.

12. The proportional valve according to claim 11, wherein each of the at least two drive assemblies comprises:
an electromagnetic actuator (310) connected to the other end of the valve body;
a diaphragm (320) connected to the valve body and closing the other end of the valve body, the first port (20) and the at least two second ports (30) being formed on the same side of the diaphragm (320); and
a magnetic member (330) connected to a corresponding sealing pad (200) of the at least two sealing pads (200), the magnetic member (330) being configured to move the corresponding sealing pad (200) when driven by the electromagnetic actuator (310).

13. The proportional valve according to claim 12, wherein the drive assembly further comprises:
a first seat body (340) connected to the sealing pad (200); and
a second seat body (350) extending through the diaphragm (320) and inserted into the first seat body (340), the second seat body (350) cooperating with the first seat body (340) to clamp and fix the diaphragm (320).

14. The proportional valve according to claim 13, wherein the magnetic member (330) is sleeved on the second seat body (350), and is clamped and fixed by the first seat body (340) and the second seat body (350).

15. The proportional valve according to any one of claims 12 to 14, wherein:
an axis of the electromagnetic actuator (310) extends along an axial direction of the valve body; and
the electromagnetic actuator (310) is opposite to the at least two second ports (30).

16. A gas device, comprising the proportional valve according to any one of claims 11 to 15.
